# FASCICULE DE BREVET EUROPEEN

(11) **EP 1 167 320 B1**
(45) Date de publication et mention de la délivrance du brevet: **25.08.2004**
(21) Numéro de dépôt: 01401604.2
(22) Date de dépôt: 18.06.2001
(51) Int. Cl.: C04B 35/109, C03B 5/237

(54) **Produits alumine-zircone-silice fondus et coulés de coût réduit et leurs utilisations**
Kostengünstige schmelzgegossene Aluminiumoxid-Zirkonoxid-Siliziumoxid Produkte und ihre Verwendung
Reduced cost fusion-cast alumina-zirconia-silica products and their use

(30) Priorité: 20.06.2000 FR 0007831
(43) Date de publication de la demande: 02.01.2002
(73) Titulaire: SOCIETE EUROPEENNE DES PRODUITS REFRACTAIRES, F-92400 Courbevoie (FR)
(72) Inventeur: Boussant-Roux, Yves Marcel Léon, 84140 Montfavet (FR); Gaubil, Michel Marc, 84000 Avignon (FR); Colozzi, Thierry Bruno Jacques, 84000 Avignon (FR)
(74) Mandataire: Colas, Jean-Pierre

(56) Documents cités:
- FR-A- 2 142 624

## Description

L'invention concerne notamment des produits AZS (Alumine-Zircone-Silice) moins coûteux que les produits AZS classiques, actuellement disponibles sur le marché et dont les propriétés sont adaptées à des conditions de service non extrêmes telles que celles régnant dans les zones arrières des fours de fusion du verre et/ou dans certaines superstructures de fours. Les produits de l'invention contiennent plus de silice et moins de zircone que les produits AZS classiques utilisés actuellement.

Les produits fondus et coulés dans un moule (appelés aussi électrofondus) peuvent être obtenus par fusion d'un mélange de matières premières appropriées dans un four à arc électrique ou toute autre technique de fusion adaptée à ces produits. Le liquide fondu est ensuite coulé dans un moule permettant d'obtenir directement des pièces de forme. En général, le produit est ensuite soumis à un cycle de refroidissement contrôlé pour être amené à température ambiante sans fracturation. Cette opération est appelée recuisson par l'homme de l'art.

Les produits AZS sont connus depuis plusieurs dizaines d'années. Le brevet US-A-2 438 552 décrit un des premiers perfectionnements apportés à ce type de produit. Les auteurs préconisent l'ajout de Na₂O (1-2,2%) et MgO/CaO (0,2-0,8%) pour répondre à des problèmes de faisabilité concernant des produits avec Al2O3 : 45-70%, ZrO2 : 14-40% et SiO₂ : 9-12%.

Les produits AZS commercialisés actuellement, tels que l'ER-1681, l'ER-1685 ou l'ER-1711 de la Demanderesse, contiennent de 45 à 50% d'Al₂O₃, de 32 à 40% de ZrO₂, de 12 à 16% de SiO₂ et environ 1% de Na₂O.

Ces produits conviennent parfaitement bien pour la fabrication des fours de verrerie. Les matériaux AZS actuels sont principalement utilisés pour les zones en contact avec le verre fondu ainsi que pour la superstructure des fours verriers. Cependant, les superstructures situées dans le laboratoire de certains fours sont moins sollicitées du point de vue de la résistance à la corrosion.

Par ailleurs, les zones arrière du four telles que les gaines de brûleurs ou les cerveaux, les murs et les pièces d'empilage des chambres de régénérateurs de chaleur sont des zones qui, n'étant pas en contact avec le verre fondu, sont moins sollicitées du point de vue de la résistance à la corrosion. Les produits AZS actuels ne sont que peu utilisés dans ces zones en raison de leur coût trop élevé.

Par contre, les matériaux situés dans ces zones du four subissent de fortes variations de température en fonction des cycles d'utilisation des régénérateurs. En effet, pendant le fonctionnement des chambres d'empilage du régénérateur, les gaz chauds qui proviennent du four entrent dans l'empilage par le haut et libèrent leur énergie calorifique. Pendant ce temps, de l'air froid entre en bas d'un autre empilage chauffé au cours du cycle précédent pour sortir chaud en haut de l'empilage d'où il est conduit jusqu'aux brûleurs.

Il existe donc un besoin pour un matériau réfractaire de coût réduit et présentant des propriétés adaptées à des conditions de fonctionnement moins sollicitantes telles que celles qui règnent dans les zones arrière des fours verriers et/ou dans certaines superstructures de fours moins performants.

Dans le but de proposer un produit moins cher, nous avons envisagé de réduire le coût des matières premières. Cela peut être réalisé, d'une part, en diminuant le taux de zircone qui est un élément coûteux de la composition et, d'autre part, en utilisant des matières secondaires (rebuts de fabrication ou matériaux usagés récupérés).

Cette solution attractive conduit cependant à quelques problèmes de faisabilité et de comportement des matériaux en service liés au changement d'analyse chimique des matériaux et à la présence éventuelle d'impuretés à des teneurs élevées pouvant, par exemple, provenir de l'utilisation de produits usagés.

De manière surprenante, nous avons trouvé un domaine d'analyse chimique permettant d'assurer la faisabilité des pièces ainsi qu'un bon comportement du matériau en service dans les zones précitées des fours verriers.

Plus particulièrement, l'invention concerne des produits AZS fondus et coulés caractérisés par une analyse chimique, en poids, comprenant :
Al₂O₃ : 45-65 %
ZrO₂ : 10,0-29,0 %
SiO₂ : 20,0-24,0 %
SiO₂/(Na₂O+K₂O) : 4,5-8,0
autres espèces : 0,5-4,0 %

Le rapport pondéral SiO₂/(Na₂O + K₂O) est, de préférence, dans la gamme de 6,0 à 7,0.

La teneur en ZrO₂ est, de préférence, dans la gamme de 14,0 à 25,0 % en poids.

La teneur en Al₂O₃ est, de préférence, dans la gamme de 50 à 65 % en poids.

Des produits AZS de l'invention particulièrement préférés présentent l'analyse chimique, en poids, suivante :
Al₂O₃ : 50-65 %
ZrO₂ : 14,0-25,0 %
SiO₂ : > 20,0-24,0 %
SiO₂/(Na₂O+K₂O) : 6,0-7,0
autres espèces : 0,5-4 %

Les produits AZS de l'invention peuvent être moulés à toutes formes désirées. Des formes préférées sont les blocs et les éléments cruciformes empilables. Les blocs présentent, de préférence, à l'analyse, une teneur en ZrO₂ qui est dans la gamme de 20 à 25 % en poids. De tels blocs sont particulièrement utiles dans les superstructures ou les zones arrière des fours de verrerie.

Les éléments cruciformes présentent, de préférence, à l'analyse, une teneur en ZrO₂ qui est dans la gamme de 14 à 20 % en poids. De tels éléments sont particulièrement utiles dans les régénérateurs des fours de verrerie.

L'objectif de réduction des coûts est atteint grâce à la diminution du taux de zircone par rapport aux produits actuels. Cependant, la teneur en zircone ne doit pas être trop basse car sinon le produit perd sa cohésion en service. En effet, la zircone est un constituant très réfractaire et qui offre une très bonne résistance chimique à haute température. Dans la pratique, les produits de l'invention contiennent de 10 à 29% de zircone et, de préférence, 14 à 25%.

Les autres espèces, notamment les impuretés, qui peuvent être présentes en des proportions relativement élevées (jusqu'à 4 % en poids), se retrouvent dans la phase vitreuse constituée principalement de la silice. Pour éviter que leur concentration dans la phase vitreuse ne soit excessivement élevée, ce qui dégraderait les performances du produit, on a trouvé que la proportion de silice doit être d'au moins 20 % en poids et, de préférence, supérieure à 20 % en poids.

Par ailleurs, le taux de silice est limité par l'application. En effet, les produits contenant plus de 24% de silice supportent mal des cycles thermiques répétés et/ou présentent des propriétés très dégradées à l'application.

La présence d'oxyde de sodium et/ou de potassium dans les produits AZS est usuelle et nécessaire afin de conférer à la phase vitreuse des caractéristiques physiques et chimiques adaptées. Toutefois, pour permettre la faisabilité des pièces et un bon comportement pour l'application envisagée, on a trouvé que le rapport pondéral de la silice à la somme des oxydes de sodium et de potassium devait se situer dans une gamme particulière critique, à savoir entre 4,5 et 8. Pour des raisons de coût, on utilise de préférence l'oxyde de sodium.

Par ailleurs, les autres espèces, qui sont des impuretés inévitables ou des ajouts volontaires seront présentes en une proportion totale de 0,5 à 4 %. Ces autres espèces comprennent notamment des oxydes de calcium et de magnésium. Contrairement aux enseignements du brevet FR 1 328 880, la présence de fluor n'est pas nécessaire et les produits de l'invention en sont exempts.

L'alumine constitue le complément à 100 % du total des constituants précités.

Dans l'invention, la diminution du taux de zircone est compensée par l'augmentation de la teneur en silice mais surtout par celle de la teneur en alumine.

Selon un mode de réalisation particulièrement avantageux du point de vue économique, les produits AZS de l'invention sont élaborés à partir de matières premières comprenant une matière secondaire, telle qu'un rebut de fabrication ou un matériau AZS usagé récupéré. On préfère utiliser un matériau AZS usagé récupéré. Cette matière secondaire peut constituer de 20 à 85 % du poids de la charge à fondre, de préférence 40 à 70 %.

Bien entendu, les produits de l'invention peuvent aussi être élaborés uniquement à partir de matières premières classiques.

L'invention concerne aussi l'utilisation des produits AZS de l'invention pour la construction de zones arrière de fours verriers telles que les gaines de brûleurs ou les cerveaux, ou des murs des chambres de régénérateurs de chaleur, ainsi que pour la fabrication d'éléments empilables pour régénérateurs de chaleur tels que des éléments de forme cruciforme ou autre.

La description qui va suivre faite en se référant aux exemples réalisés permettra de bien définir le domaine d'analyse chimique de l'invention et de mettre en évidence les avantages des nouveaux produits obtenus.

Dans ces exemples, on a utilisé comme matière première le produit A, une matière secondaire qui correspond à des produits AZS contenant environ 32% de zircone, 51% d'alumine et 15% de silice. Ces produits (rebuts de fabrication ou produits usagés) sont concassés à une granulométrie inférieure à 20mm pour donner le produit A utilisé dans les exemples de réalisation de l'invention. Les autres matières premières utilisées sont des produits de pureté supérieure à 98%; en particulier, on a utilisé de l'alumine, du sable de zircon, de la fumée de silice, du carbonate de sodium et de la zircone (par exemple la zircone CC10 commercialisée par la Demanderesse). D'autres espèces seront inévitablement présentes à titre d'impuretés, en particulier des oxydes de calcium et de magnésium.

Les produits ont été obtenus par fusion de la charge des matières premières dans un four de fusion électrique de type Héroult, dans des conditions oxydantes comme décrit dans le brevet français N° 1 205 577, puis par coulée dans un moule et refroidissement contrôlé (recuisson), selon la pratique usuelle.

Dans les tableaux, le total des pourcentages des constituants mentionnés n'atteint pas 100 %. Le complément à 100 % est constitué d'impuretés diverses.

Le tableau 1 regroupe quelques caractéristiques des produits réalisés au cours de l'étude ainsi que les rendements. Dans ces produits, l'oxyde de métal alcalin était Na₂O.

On s'est intéressé tout d'abord à la faisabilité des produits selon l'invention. Pour cela, on a observé le rendement qui indique le nombre de pièces bonnes par rapport au nombre total de pièces coulées. Une pièce est jugée bonne si elle ne présente pas de fissuration dite " traversante ". De tels défauts peuvent conduire jusqu'au morcellement complet de la pièce. L'homme de l'art considère que, pour ce type de produits, le rendement est acceptable s'il est supérieur à 70%. Les pièces produites étaient des blocs de dimension 300x250x300mm (Type " B " dans le tableau 1) ou bien des éléments empilables de régénérateur de type cruciforme vendues par la Demanderesse (Type " C " dans le tableau 1).

Nos études, et en particulier les exemples regroupés dans le tableau 2, ont montré que pour résoudre le problème de faisabilité, c'est le rapport silice/oxyde de sodium qui est critique.

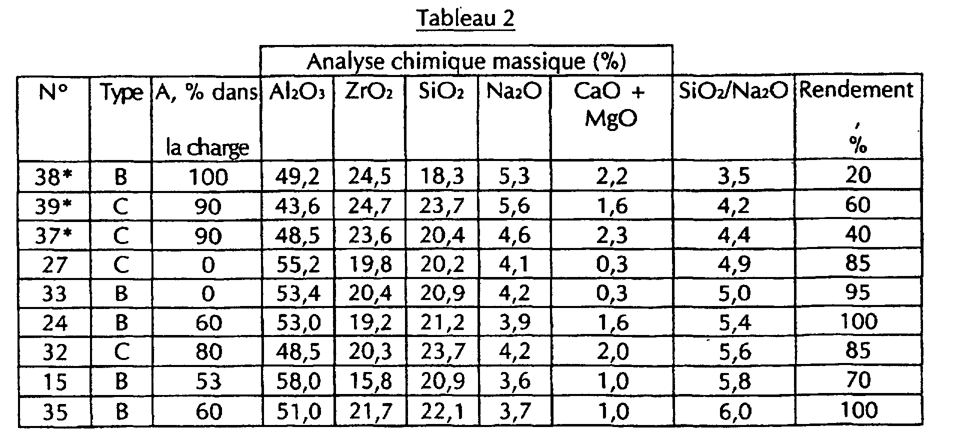

Les exemples montrent que le rendement est correct lorsque le rapport silice sur oxyde de sodium est supérieur à 4,5. Les analyses réalisées sur les produits obtenus lors de nos essais semblent indiquer qu'en deçà de cette limite, la phase vitreuse cristallise sous forme de néphéline. Cette phase cristalline apparaît au détriment de la phase vitreuse. Or, c'est cette phase vitreuse qui permet, grâce à sa plasticité, d'accommoder les contraintes liées au refroidissement du matériau sous gradient thermique et ainsi d'assurer la faisabilité des pièces. L'apparition de cette phase cristallisée ne permet pas d'obtenir un rendement de fabrication acceptable.

Par ailleurs, les exemples 42* à 44* indiquent qu'au delà de 29% en zircone, la faisabilité n'est plus assurée pour les produits, même avec un rapport SiO₂/Na₂O compris entre 4,5 et 8.

On a étudié aussi le comportement des pièces à haute température. Le test (Test A) est effectué à des températures de l'ordre de celles rencontrées dans les fours de fusion du verre. Les produits ont été portés à 1500°C pendant 48h et on a observé, après refroidissement, une éventuelle dégradation visible du matériau symptomatique d'une transformation interne. Le comportement est jugé " bon" si aucune dégradation (en particulier fissuration, déformation...) n'est visible. Dans le cas contraire, on considère que le comportement est " mauvais " et que le produit ne peut convenir pour l'application visée. Les résultats sont regroupés dans le tableau 3.

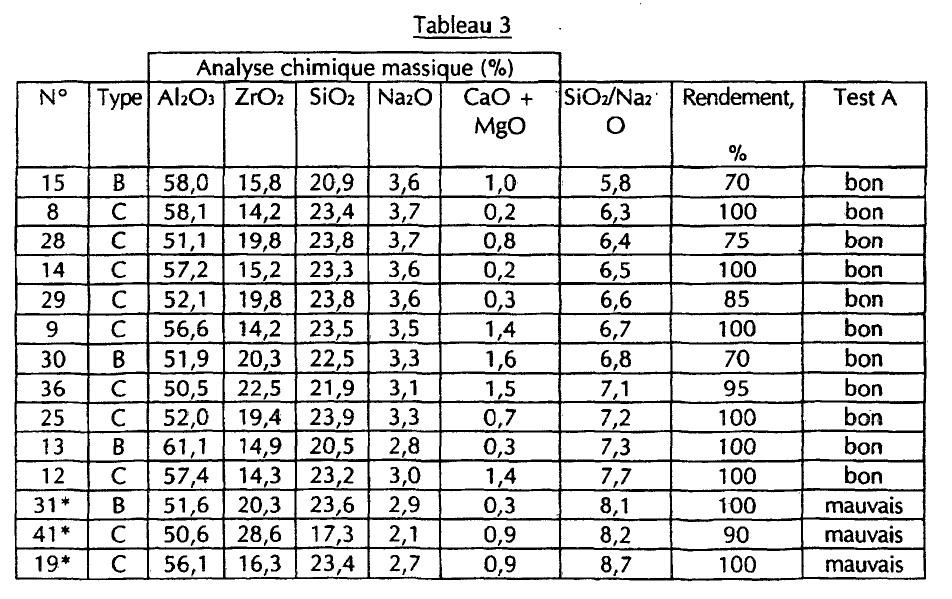

On remarque que, lorsque le rapport SiO₂/Na₂O augmente au-delà de 7, une certaine fragilité apparaît mais les produits restent utilisables ; par contre, si le rapport SiO₂/Na₂O est supérieur à 8 le comportement devient mauvais. En fait, les analyses montrent qu'au delà de cette limite, il y a formation de mullite au détriment de la phase vitreuse. Or, la plasticité de cette dernière est nécessaire pour que le matériau ne soit pas fragilisé par les fortes variations de température et les changements qui l'accompagnent. Lors d'un chauffage à haute température et/ou en atmosphère alcaline, la phase mullitique va se transformer ce qui sera à l'origine d'une destruction du matériau.

On a également étudié la tenue aux cycles thermiques (Test B). En effet, les pièces utilisées dans les régénérateurs thermiques doivent subir de nombreux cycles. Pour l'essai, on a fait subir aux pièces 50 cycles de 20 minutes entre 1350 et 900°C. On considère que le résultat est " bon " si, à l'issue du test, on n'observe pas de fissures importantes dans le matériau.

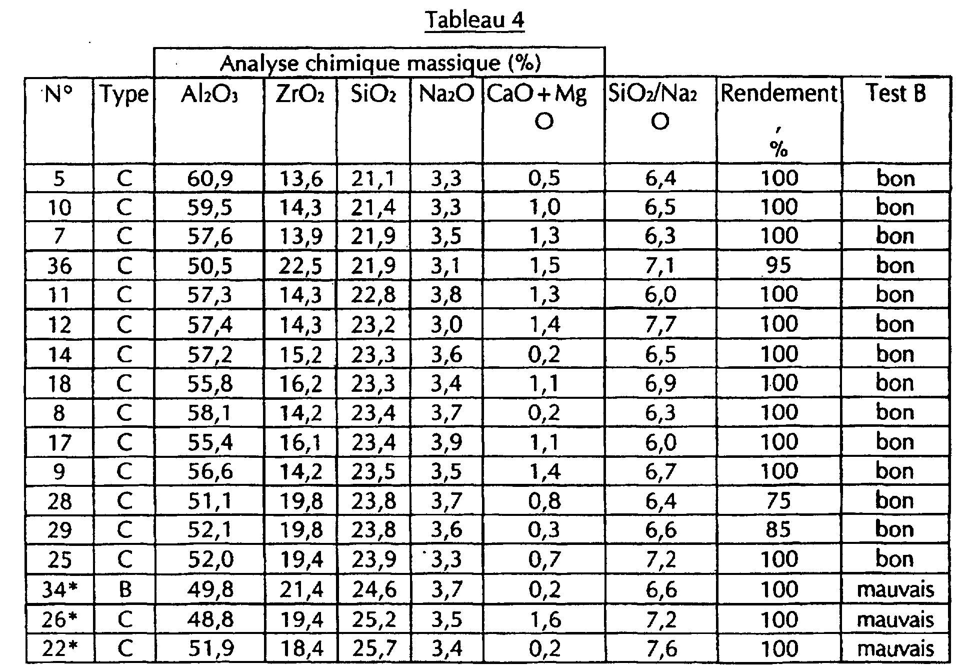

Lorsque le taux de silice augmente, des microfissures peuvent apparaître mais le comportement des pièces reste acceptable.

Par contre, les résultats du tableau 4 montrent que, lorsque le taux de silice est supérieur à 24%, les pièces sont mauvaises, présentant soit une grande fragilité au cyclage soit un comportement aux sollicitations mécaniques insuffisant pour une utilisation en four de verrerie.

En fait, la silice est l'élément de la composition dont le point de fusion est le plus bas ; il faut limiter sa teneur à 24 % pour conserver le caractère réfractaire des produits de l'invention.
On remarque que les produits de l'invention supportent bien les cycles thermiques. On peut penser que ceci est favorisé par l'augmentation de la proportion de corindon dans les pièces obtenues.

On a testé également la résistance à la corrosion en phase vapeur. En effet, même si les produits de l'invention ne sont pas destinés à être utilisés directement au contact du verre fondu, il existe dans les fours de verrerie une atmosphère corrosive due à la volatilisation de certains éléments entant dans la composition du verre en élaboration. Cette atmosphère corrosive transforme les produits à haute température, la pénétration des éléments agressifs entraînant une modification du matériau et un affaiblissement qui peut se traduire par une destructuration en service. Le test est mené à 1300°C pendant 150h dans une atmosphère sodique. Pour comparer les produits on mesure l'épaisseur de la zone transformée.

Les exemples 3, 6, 10, 17, 26, 27 et 31 ont présenté des épaisseurs transformées de 2mm alors que, dans ce même test, le produit actuel ER-1682 (Al₂O₃ : 50,6 %, ZrO₂ : 32,5 %, SiO₂, 15,6 % Na₂O : 1,1 %, et autres : 0,2 %) de la Demanderesse subit une transformation sur 1,5 mm. Ces résultats confirment la possibilité d'utiliser les produits de l'invention dans les zones arrière et/ou en superstructure des fours de verrerie.

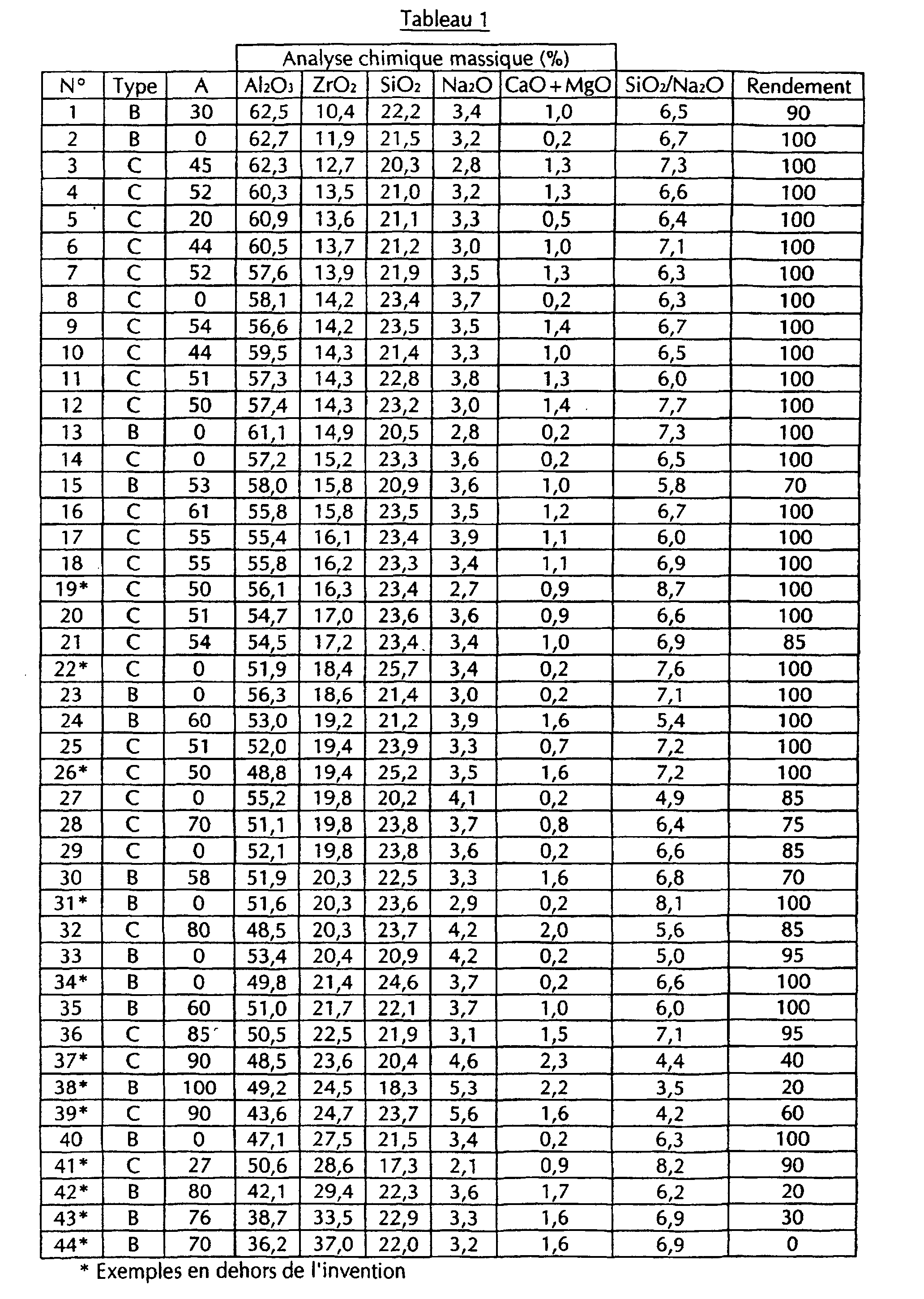

## Revendications

1. Produits AZS fondus et coulés **caractérisés par** une analyse chimique, en poids, comprenant :
Al₂O₃ : 45-65 %
ZrO₂ : 10,0-29,0 %
SiO₂ : 20,0-24,0 %
SiO₂/(Na₂O+K₂O) : 4,5-8
autres espèces: 0,5-4,0 %

2. Produits AZS fondus et coulés selon la revendication 1 **caractérisés par** une analyse chimique, en poids, comprenant :
Al₂O₃ : 50-65%
ZrO₂ : 14-25%
SiO₂ : > 20-24%
SiO₂/(Na₂O+K₂O) : 6-7
autres espèces: 0,5-4%

3. Produits AZS fondus et coulés selon la revendication 1 **caractérisés en ce qu'**ils comprennent plus de 20,0 % à 24,0 % en poids de SiO₂.

4. Produits AZS fondus et coulés selon la revendication 1 ou 3, **caractérisés en ce qu'**ils présentent un rapport SiO₂/(Na₂O+ K₂O) de 6,0 à 7,0.

5. Produits AZS fondus et coulés selon l'une quelconque des revendications 1, 3 ou 4, **caractérisés en ce qu'**ils comprennent de 14,0 à 25,0 % de ZrO₂.

6. Produits AZS fondus et coulés selon l'une quelconque des revendications 1, 3, 4 et 5, **caractérisés en ce qu'**ils comprennent de 50 à 65 % d' Al₂O₃.

7. Produits AZS fondus et coulés selon l'une quelconque des revendications 1 à 6, **caractérisés en ce qu'**ils sont élaborés à partir d'une charge de départ contenant 20 à 85 % en poids de matières secondaires.

8. Produits AZS fondus et coulés selon la revendication 7, **caractérisés en ce que** les matières secondaires constituent de 40 à 70 % en poids de la charge de départ.

9. Produits AZS fondus et coulés selon les revendications 7 ou 8, **caractérisés en ce qu'**ils sont sous la forme de blocs et présentent une analyse chimique, en poids, comprenant 20-25% de ZrO₂.

10. Utilisation des blocs de la revendication 9 dans les superstructures ou les zones arrière des fours de verrerie.

11. Produits AZS fondus et coulés selon la revendication 7 ou 8 **caractérisés en ce qu'**ils sont sous la forme d'éléments cruciformes et présentent une analyse chimique, en poids, comprenant 14-20% de ZrO2.

12. Utilisation des éléments cruciformes AZS selon la revendication 11 dans les régénérateurs des fours de verrerie.

## Claims

1. Fused and cast AZS products **characterized in that** they contain:
Al₂O₃: 45-65 wt.%
ZrO₂: 10.0-29.0 wt.%
SiO₂: 20.0-24.0 wt.%
SiO₂/(Na₂O+K₂O) (weight ratio): 4.5-8
other species: 0.5-4.0 wt.%

2. Fused and cast AZS products according to claim 1, **characterized in that** they contain:
Al₂O₃: 50-65 wt.%
ZrO₂: 14-25 wt.%
SiO₂: > 20-24 wt.%
SiO₂/(Na₂O+K₂O) (weight ratio): 6-7
other species: 0.5-4 wt.%

3. Fused and cast AZS products according to claim 1, **characterized in that** they contain more than 20.0 wt.% to 24.0 wt.% SiO₂.

4. Fused and cast AZS products according to claim 1 or claim 3, **characterized in that** they have an SiO₂/(Na₂O+K₂O) weight ratio from 6.0 to 7.0.

5. Fused and cast AZS products according to any of claims 1, 3 and 4, **characterized in that** they contain from 14.0 wt.% to 25.0 wt.% ZrO₂.

6. Fused and cast AZS products according to any of claims 1, 3, 4 and 5, **characterized in that** they contain from 50 wt.% to 65 wt.% Al₂O₃.

7. Fused and cast AZS products according to any of claims 1 to 6, **characterized in that** they are produced from a starting charge containing 20 wt.% to 85 wt.% of secondary materials.

8. Fused and cast AZS products according to claim 7, **characterized in that** the secondary materials constitute from 40 wt.% to 70 wt.% of the starting charge.

9. Fused and cast AZS products according to claim 7 or claim 8, **characterized in that** they are in the form of blocks and contain 20-25 wt.% ZrO₂.

10. Use of blocks according to claim 9 in the superstructures or rear areas of glass-melting furnaces.

11. Fused and cast AZS products according to claim 7 or claim 8, **characterized in that** they are in the form of cruciform components and contain 14-20 wt.% ZrO₂.

12. Use of AZS cruciform components according to claim 11 in glass-melting furnace regenerators.

## Patentansprüche

1. Schmelzflüssig gegossene AZS-Produkte, die durch die folgende chemische Analyse **gekennzeichnet** sind:
| | |
|---|---|
| Al₂O₃ | 45-65 Gew.-% |
| ZrO₂ | 10,0-29,0 Gew.-% |
| SiO₂ | 20,0-24,0 Gew.-% |
| SiO₂/(Na₂O+K₂O) | 4,5-8 Gew.-% |
| andere | 0,5-4,0 Gew.-%. |

2. Schmelzflüssig gegossene AZS-Produkte gemäß Anspruch 1, die durch die folgende chemische Analyse **gekennzeichnet** sind:
| | |
|---|---|
| Al₂O₃ | 50-65 Gew.-% |
| ZrO₂ | 14-25 Gew.-% |
| SiO₂ | > 20-24 Gew.-% |
| SiO₂/(Na₂O+K₂O) | 6-7 Gew.-% |
| andere | 0,5-4 Gew.-%. |

3. Schmelzflüssig gegossene AZS-Produkte gemäß Anspruch 1, **dadurch gekennzeichnet, dass** sie mehr als 20,0 bis 24,0 Gew.-% SiO₂ umfassen.

4. Schmelzflüssig gegossene AZS-Produkte gemäß Anspruch 1 oder 3, **dadurch gekennzeichnet, dass** sie ein Verhältnis von SiO₂/(Na₂O+K₂O) von 6,0 bis 7,0 aufweisen.

5. Schmelzflüssig gegossene AZS-Produkte gemäß einem der Ansprüche 1, 3 oder 4, **dadurch gekennzeichnet, dass** sie 14,0 bis 25,0 Gew.-% ZrO₂ umfassen.

6. Schmelzflüssig gegossene AZS-Produkte gemäß einem der Ansprüche 1, 3, 4 und 5, **dadurch gekennzeichnet, dass** sie 50 bis 65 Gew.-% Al₂O₃ umfassen.

7. Schmelzflüssig gegossene AZS-Produkte gemäß einem der Ansprüche 1 bis 6, **dadurch gekennzeichnet, dass** sie ausgehend von einer Ausgangscharge hergestellt werden, die 20 bis 85 Gew.-% Sekundärrohstoffe enthalten.

8. Schmelzflüssig gegossene AZS-Produkte gemäß Anspruch 7, **dadurch gekennzeichnet, dass** die Sekundärrohstoffe 40 bis 70 Gew.-% der Ausgangscharge ausmachen.

9. Schmelzflüssig gegossene AZS-Produkte gemäß den Ansprüchen 7 oder 8, **dadurch gekennzeichnet, dass** sie in Form von Blöcken vorliegen und eine chemische Analyse aufweisen, die 20-25 Gew.-% ZrO₂ umfasst.

10. Verwendung der Blöcke gemäß Anspruch 9 in den Überbauten oder hinteren Zonen von Glasschmelzöfen.

11. Schmelzflüssig gegossene AZS-Produkte gemäß Anspruch 7 oder 8, **dadurch gekennzeichnet, dass** sie in Form von kreuzförmigen Elementen vorliegen und eine chemische Analyse aufweisen, die 14-20 Gew.-% ZrO₂ umfasst.

12. Verwendung der kreuzförmigen AZS-Elemente gemäß Anspruch 11 in den Regeneratoren von Glasschmelzöfen.
